# FASCICULE DE BREVET EUROPEEN

(11) **EP 1 065 083 B1**
(45) Date de publication et mention de la délivrance du brevet: **10.01.2007**
(21) Numéro de dépôt: 00401796.8
(22) Date de dépôt: 23.06.2000
(51) Int. Cl.: B60J 5/10

(54) **Agencement pour l'ouverture d'un ouvrant transversal arrière de véhicule**
Öffnungsanordnung für transversale Kraftfahrzeug-Heckklappentür
Arrangement for opening a transversal rear hatch in a motor vehicle

(30) Priorité: 29.06.1999 FR 9908289
(43) Date de publication de la demande: 03.01.2001
(73) Titulaire: Renault s.a.s., 92100 Boulogne Billancourt (FR)
(72) Inventeur: Laferte, Karl, 75006 Paris (FR)

(56) Documents cités:
- EP-A- 0 384 719
- EP-A- 0 618 129
- EP-A- 0 841 230
- DE-A- 19 522 296
- US-A- 2 631 880

## Description

L'invention concerne un agencement pour l'ouverture et la fermeture d'ouvrants transversaux arrière d'un véhicule automobile.

L'invention concerne plus particulièrement un agencement pour l'ouverture et la fermeture d'un ouvrant transversal arrière d'un véhicule, notamment un ouvrant arrière d'un véhicule automobile de tourisme et/ou de loisirs, du type dans lequel l'ouvrant comporte d'une part un hayon supérieur, notamment un hayon comportant une lunette vitrée, qui est articulé à son extrémité supérieure autour d'un axe transversal supérieur et qui est mobile entre une position baissée de fermeture et une position levée d'ouverture, et d'autre part un portillon inférieur qui est monté articulé à l'une de ses extrémités latérales, autour d'un axe vertical latéral ou, à son extrémité inférieure, autour d'un axe transversal, entre une position d'ouverture et une position de fermeture, et du type dans lequel, dans une position fermée des ouvrants, le bord transversal inférieur du hayon supérieur, s'étend en regard d'une partie d'appui complémentaire d'extrémité supérieure du portillon inférieur.

On connaît de nombreux exemples d'agencements de ce type.

Il s'agit pour la plupart d'ouvrants transversaux arrière qui comportent un hayon supérieur vitré et un portillon inférieur.

Le portillon est articulé soit latéralement, soit à son extrémité inférieure, et comporte un premier dispositif de fermeture permettant son verrouillage sur une caisse du véhicule.

Le hayon supérieur est articulé à son extrémité supérieure autour de son axe transversal supérieur et comporte sur son bord transversal inférieur un second dispositif de fermeture permettant son verrouillage sur la partie d'appui complémentaire du portillon inférieur.

Pour ouvrir l'ouvrant en totalité, l'utilisateur doit d'abord déverrouiller le second dispositif de fermeture du hayon supérieur, puis remonter manuellement le hayon supérieur jusqu'à une position à mi-course de la position levée, à l'encontre de l'effort de retenue exercé par des amortisseurs qui relient le hayon supérieur à la caisse du véhicule. Une fois cette position à mi-course dépassée, les amortisseurs repoussent naturellement le hayon supérieur en position levée. L'utilisateur peut alors déverrouiller le premier dispositif de fermeture du portillon inférieur, et l'ouvrir.

Pour fermer l'ouvrant en totalité, l'utilisateur doit d'abord refermer le portillon inférieur et verrouiller le premier dispositif du hayon inférieur, puis abaisser le hayon inférieur jusqu'à la position à mi-course, à l'encontre de l'effort de retenue exercé par les amortisseurs, qui repoussent ensuite naturellement le hayon supérieur en position baissée. L'utilisateur doit alors verrouiller le second dispositif de verrouillage du hayon inférieur.

Cette opération est longue et contraignante, en particulier si l'utilisateur a les bras chargées d'objets qu'il désire déposer dans le coffre du véhicule qui est accessible par l'ouvrant.

De plus, cette opération nécessite impérativement de refermer le portillon inférieur avant d'abaisser le hayon supérieur, au risque de détériorer le hayon supérieur au cas où le portillon inférieur viendrait à se refermer dessus.

Pour remédier à ces inconvénients, l'invention propose un agencement pour l'ouverture automatisée de l'ouvrant.

Dans ce but l'invention propose un agencement du type précédemment décrit, caractérisé en ce qu'il comporte des moyens électroniques et des moyens mécaniques pour commander l'ouverture, et pour interdire la fermeture du hayon supérieur avant celle du portillon inférieur selon la partie caractérizante de la revendication 1.

Selon d'autres caractéristiques de l'invention :
- les moyens mécaniques comportent une serrure commandée de hayon, une serrure commandée de portillon, et des moyens de rappel du hayon vers la position levée ;
- les moyens électroniques sont susceptibles de commander l'ouverture de l'ouvrant arrière selon un processus qui comporte :
   - une première étape au cours de laquelle, en réponse à un premier ordre de l'utilisateur, notamment par une pression sur un bouton de commande, les moyens électroniques commandent le déverrouillage de la serrure du hayon pour provoquer son ouverture automatique sous l'action des moyens de rappel,
   - une deuxième étape au cours de laquelle, en réponse à un deuxième ordre de l'utilisateur, les moyens électroniques commandent le déverrouillage de la serrure du portillon ;
- l'ouvrant arrière comporte un mécanisme d'essuyage de la lunette du hayon dont au moins une partie est escamotable sur commande dans l'épaisseur du portillon, et qui est susceptible d'être mis en marche par un ordre d'essuyage commandé à partir du poste de conduite du véhicule ;
- le processus comporte une étape préliminaire au cours de laquelle, en réponse à un ordre préliminaire de l'utilisateur, les moyens électroniques commandent l'escamotage du mécanisme d'essuyage de la lunette ;
- si le mécanisme d'essuyage de la lunette est en marche en réponse à l'ordre d'essuyage lorsque l'utilisateur adresse l'ordre préliminaire, notamment par pression sur le bouton de commande, les moyens électroniques provoquent l'arrêt du mécanisme d'essuyage indépendamment des ordres de commande provenant du poste de conduite du véhicule, avant de déclencher l'étape préliminaire d'escamotage ;
- les moyens électroniques comportent une sécurité interdisant la mise en marche du mécanisme d'essuyage en réponse à l'ordre d'essuyage émis à partir du poste de conduite du véhicule, dès lors que le hayon est déverrouillé ;
- si un ordre d'essuyage a été adressé par l'utilisateur à partir du poste de conduite du véhicule avant l'ouverture de la porte, les moyens électroniques de commande provoquent, après la fermeture de la porte, la remise en marche du mécanisme d'essuyage, notamment de façon automatique ou en réponse à un ordre d'actionnement émis à partir du poste de conduite ou d'un organe de passage d'un rapport de vitesse du véhicule ;
- le bord transversal inférieur du hayon supérieur comporte un joint dont la lèvre s'étend, en position fermée de l'ouvrant, au contact de la partie d'appui complémentaire d'extrémité supérieure du portillon inférieur.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective de la partie arrière du véhicule automobile comportant un ouvrant selon l'invention représenté en position fermée ;
- la figure 2 est une vue schématique en coupe longitudinale selon la ligne 2-2 de la figure 1 ;
- la figure 3 est une vue schématique de principe en perspective de l'ouvrant dont le hayon supérieur est représenté ouvert ;
- la figure 4 est une vue schématique de principe en perspective de l'ouvrant selon un premier mode de réalisation du portillon inférieur représenté ouvert ;
- la figure 5 est une vue schématique de principe en perspective de l'ouvrant selon un second mode de réalisation du portillon inférieur représenté ouvert ;
- la figure 6 est un organigramme illustrant le fonctionnement des moyens électroniques de commande d'ouverture et de fermeture de l'ouvrant.

Dans la description qui va suivre, des chiffres de référence identiques désignent des pièces identiques ou ayant des fonctions similaires.

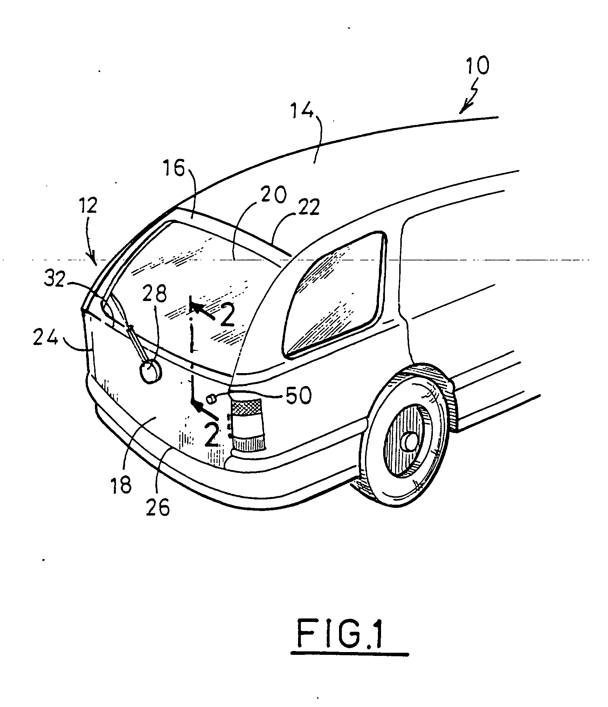

On a représenté à la figure 1 l'ensemble d'un agencement 10 pour l'ouverture et la fermeture d'un ouvrant transversal arrière 12 d'un véhicule automobile 14, notamment un véhicule automobile 14 de tourisme de loisirs.

De manière connue, l'ouvrant transversal arrière 12 comporte d'une part un hayon supérieur 16 transversal et un portillon inférieur 18 transversal.

Dans le mode de réalisation préféré de l'invention, le hayon supérieur 16 comporte une lunette vitrée 20, et il est articulé à son bord d'extrémité supérieure 22 autour d'un axe transversal supérieur (non représenté).

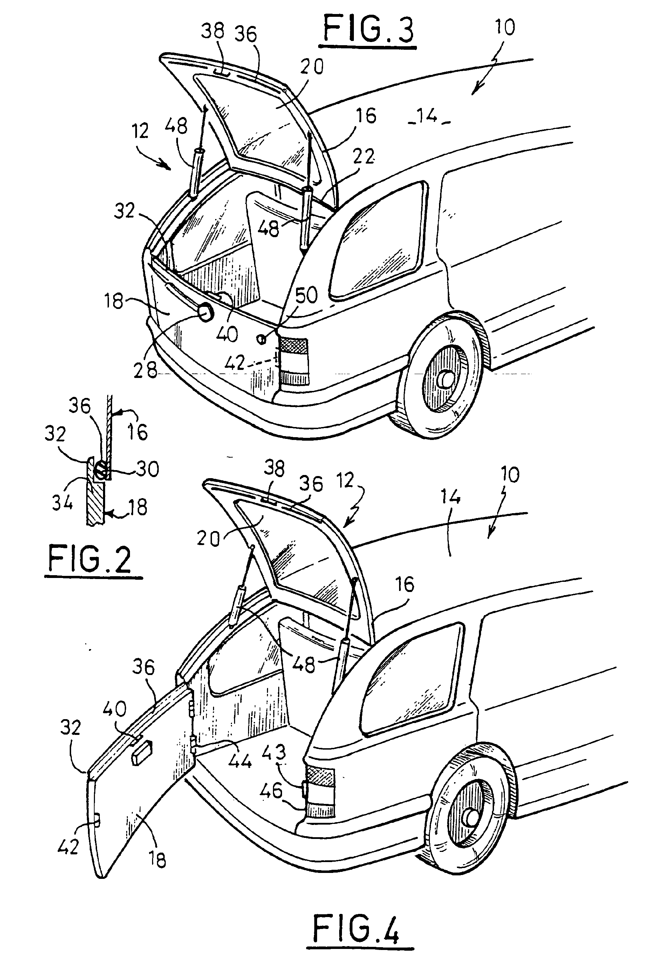

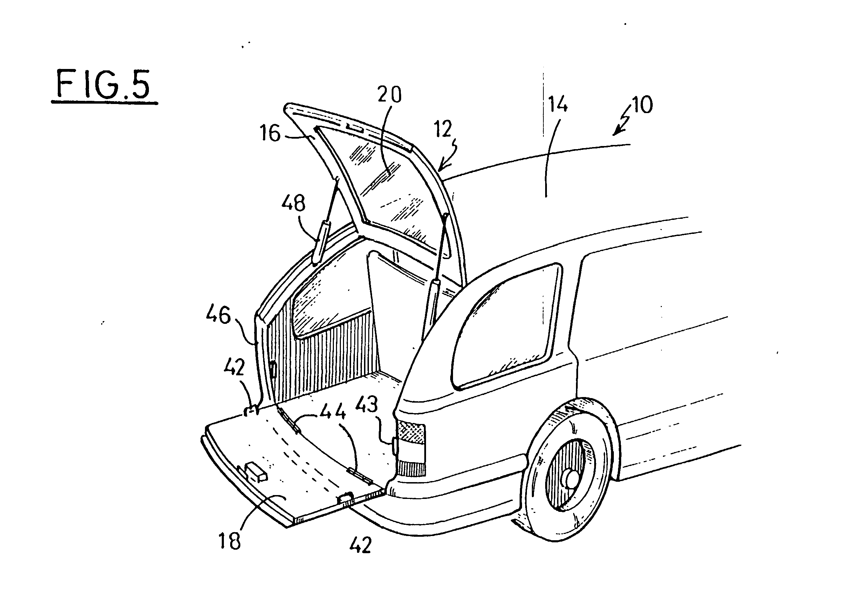

Le portillon inférieur 18 est agencé en dessous du hayon supérieur 16 et peut être, comme il sera décrit en référence aux figures 4 et 5, articulé selon au moins deux façons différentes.

Ainsi, conformément à un premier mode de réalisation de l'invention, le portillon inférieur 18 peut être articulé à l'un de ses bords d'extrémité latérale 24 autour d'un axe latéral sensiblement vertical. Cette articulation latérale peut notamment être obtenue par des charnières latérales 44. De même, le portillon inférieur 18 peut être, conformément à un second mode de réalisation de l'invention, articulé à son bord d'extrémité inférieure 26 autour d'un axe transversal horizontal (non représenté). De plus, selon le niveau d'équipement du véhicule 14, l'ouvrant 12 peut être équipé ou non d'un mécanisme 28 d'essuyage de la lunette.

Quel que soit le mode de réalisation de l'invention, et comme l'illustre la figure 2, en position fermée, un bord transversal inférieur 30 du hayon supérieur 16 s'étend en regard d'une partie d'appui 32 complémentaire du bord d'extrémité supérieure 34 du portillon inférieur 18.

En particulier, le bord transversal inférieur 30 du hayon supérieur 16 comporte un joint 36 dont la lèvre, en position fermée du hayon supérieur 16 et du portillon inférieur 18, s'étend au contact de la partie d'appui complémentaire 32 de l'extrémité supérieure 34 du portion inférieur 18. Ce joint 36 permet d'assurer une étanchéité de l'intérieur du véhicule aux intempéries extérieures.

L'ouvrant 12 du véhicule automobile 14 est susceptible d'occuper différentes configurations en fonction des ouvertures respectives du hayon supérieur 16 et du portillon inférieur 18.

Ainsi, le hayon supérieur 16 est mobile entre une position baissée de fermeture qui est représentée à la figure 1 et une position levée d'ouverture qui est représentée aux figures 3, 4 et 5.

D'une façon analogue, le portillon inférieur 18 est mobile entre une position non pivotée de fermeture qui est représentée aux figures 1 et 3 et dans laquelle il est agencé dans le prolongement de la carrosserie du véhicule 14, et une position pivotée d'ouverture, qui est représentée pour le premier mode de réalisation à la figure 4 et pour le second mode de réalisation à la figure 5, dans laquelle il permet l'accès à l'intérieur du véhicule 14.

Conformément à l'invention, l'ouvrant 12 comporte des moyens électroniques et des moyens mécaniques pour commander l'ouverture du hayon supérieur 16 avant celle du portillon inférieur 18, ou pour interdire la fermeture du hayon supérieur 16 avant celle du portillon inférieur 18.

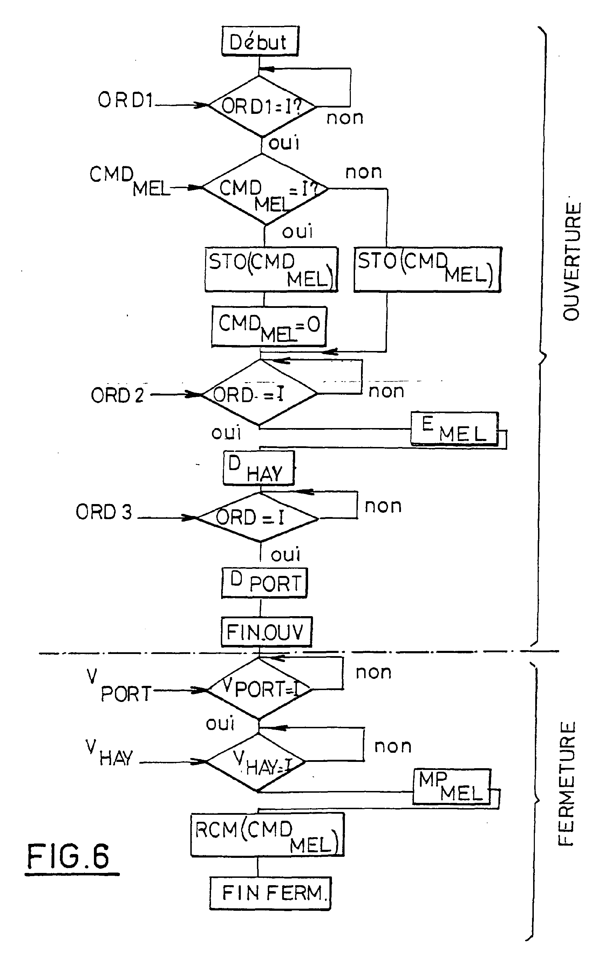

Comme l'illustrent les figures 3, 4 et 5, les moyens mécaniques comportent une serrure commandée 38 du hayon supérieur 16. Cette serrure 38 comporte par exemple, et de façon non limitative de l'invention, un pêne motorisé (non représenté), notamment par un moteur électrique, qui est porté par le hayon supérieur 16 et qui est destiné à être reçu dans une gâche 40 du portillon inférieur 18. Le pêne motorisé électriquement est commandé par les moyens électroniques dont le fonctionnement sera décrit en référence à la figure 6.

Les moyens mécaniques comportent aussi au moins une serrure commandée 42 du portillon inférieur 18 qui est elle aussi commandée électriquement par les moyens électroniques. La serrure commandée 42 comporte elle aussi un pêne motorisé (non représenté) qui est destiné à être reçu dans une gâche 43 d'un montant latéral 46 du véhicule 14.

Dans le premier mode de réalisation représenté aux figures 3 et 4, la serrure 42 est disposée latéralement sur le portillon inférieur à l'opposé de son articulation 44 latérale et il coopère avec la gâche 40 du montant latéral 46 correspondant de la caisse du véhicule.

Dans le second mode de réalisation représenté à la figure 5, le portillon inférieur 18 comporte deux serrures symétriques latérales 42 qui permettent le verrouillage du portillon inférieur 18 dans deux gâches 40 correspondantes portées par les deux montants latéraux 46 correspondants de la caisse du véhicule.

Enfin, les moyens mécaniques comportent des moyens 48 de rappel du hayon supérieur 16 vers sa position levée.

Les moyens de rappel du hayon 16 vers sa position levée sont représentés à la figure 3. Il peut s'agir par exemple de vérins 48 de rappel élastique qui rappellent le hayon 16 vers sa position levée dès lors que la serrure 38 de celui-ci est déverrouillée du portillon inférieur 18. Tout mode de réalisation de ces moyens de rappel du hayon 16 vers sa position levée peut être utilisé en vue de la réalisation de l'invention, et les vérins 48 peuvent notamment comporter des ressorts, des vérins à gaz, ou des vérins électriques ou hydrauliques.

Les serrures 38 et 42 du hayon supérieur 16 et du portillon inférieur 18 respectivement sont commandées par les moyens électroniques, notamment par un module électronique (non représenté) qui commande successivement le déverrouillage des serrures 38 et 42 en réponse à des impulsions effectuées par l'utilisateur sur un bouton de commande 50 qui peut notamment être agencé sur le portillon inférieur 18 du véhicule, ou à tout autre endroit de la carrosserie du véhicule 14 facilement accessible par l'utilisateur, ainsi que dans l'habitacle. Ce bouton de commande est représenté à titre d'exemple sur la figure 1.

La figure 6 illustre le détail du fonctionnement des moyens électroniques, en réponse à des pressions de l'utilisateur sur le bouton de commande 50, suivant une séquence d'ouverture, puis suivant une séquence de fermeture.

Sur la figure 6, le déroulement des séquences d'ouverture et de fermeture se rapporte à un véhicule 14 qui est équipé d'un mécanisme 28 d'essuyage de la lunette, du type de celui précédemment décrit en référence à la figure 1, qui est escamotable. Le détail du fonctionnement du mécanisme 28 d'essuyage ne sera pas décrit ici plus en détails, tout moyen d'escamotage pouvant être utilisé sans que le principe de fonctionnement de l'invention en soit affecté. Au moins une partie du mécanisme 28 d'essuyage peut par exemple être escamotable sur commande dans l'épaisseur du portillon 18.

Il sera ainsi entendu que, dans le cas d'un véhicule 14 qui serait dépourvu d'un tel mécanisme 28 escamotable, les ordres et les commandes correspondantes des séquences d'ouverture et de fermeture de l'ouvrant 12 ne devront alors pas être prises en compte dans l'organigramme objet de la présente description.

Lorsque l'utilisateur, par une première pression sur le bouton de commande 50, émet un premier ordre ORD1, les moyens électroniques vérifient tout d'abord le fonctionnement éventuel du mécanisme d'essuyage de la lunette, c'est-à-dire vérifient l'état de fonctionnement "I" ou d'arrêt "O" de la commande CMD_{MEL} qui initie le fonctionnement du mécanisme 28 d'essuyage de la lunette.

Si la commande CMD_{MEL} prend la valeur "I", c'est-à-dire si le mécanisme 28 d'essuyage de la lunette est en marche lorsque débute la séquence d'ouverture, les moyens électroniques mémorisent, en émettant la commande STO(CMD_{MEL}), cet état de la commande CMD_{MEL} du mécanisme d'essuyage de lunette, puis émettent une commande CMD_{MEL} d'arrêt du mécanisme 28 d'essuyage de la lunette qui prend la valeur "O" d'arrêt.

Dans le cas contraire, dans lequel la commande CMD_{MEL} correspond initialement à un arrêt "O" du mécanisme 28 d'essuyage de la lunette, les moyens électroniques mettent en mémoire par la commande STO(CMD_{MEL}) cette valeur "O" d'arrêt du mécanisme 28 d'essuyage de la lunette et se placent en attente d'un deuxième ordre ORD2 de l'utilisateur.

Les moyens électroniques restent en état de veille tant que le deuxième ordre de l'utilisateur ORD2 ne leur est pas parvenu. Une fois que cet ordre ORD2 leur est parvenu, les moyens électroniques émettent la commande E_{MEL} d'escamotage du mécanisme 28 d'essuyage de la lunette puis la commande de déverrouillage D_{HAY} du hayon supérieur 16 qui remonte alors automatiquement vers sa position élevée sous l'action des moyens de rappel 48 précédemment décrits.

Puis les moyens électroniques se placent en attente d'un troisième ordre de l'utilisateur ORD3 de commande du déverrouillage du portillon 18. Tant que cet ordre ORD3 n'est pas parvenu aux moyens électroniques, ceux-ci restent en état de veille. Lorsque l'ordre ORD3 a été émis, les moyens électroniques commandent le déverrouillage D_{PORT} des portes du portillon 18 et la fin "FIN. OUV" de la séquence d'ouverture.

La séquence de fermeture intervient après une séquence d'ouverture du type de celle qui vient d'être décrite. La séquence de fermeture comporte une première étape dans laquelle les moyens électroniques détectent, par exemple notamment au moyen de capteurs (non représentés) disposés dans la serrure 42 du portillon, l'état V_{PORT} de verrouillage qui prend alors la valeur active "I" de verrouillage du portillon 18 puis l'état V_{HAY} de verrouillage qui prend alors la valeur "I" de verrouillage du hayon 16.

Les moyens électroniques commandent ensuite la remise en place MPMEL du mécanisme d'essuyage 28 de la lunette. Les moyens électroniques émettent alors l'ordre RCM(CMD_{MEL}) qui commandent le rappel de l'état précédent "l"' ou "O" de fonctionnement du mécanisme 28 d'essuyage de la lunette. De cette façon, que le mécanisme 28 d'essuyage de la lunette est placé à nouveau dans l'état qui précédait l'ouverture de l'ouvrant 12, c'est-à-dire l'état qui a été mis en mémoire à l'aide de la commande STO(CMD_{MEL}).

En variante (non représentée) à cette remise en marche automatique du mécanisme d'essuyage 28 de la lunette 20, les moyens électroniques peuvent commander la remise en marche du mécanisme d'essuyage 28 de la lunette 20 en réponse à un ordre d'actionnement émis à partir du poste de conduite ou peuvent commander la remise en marche du mécanisme d'essuyage 28 de la lunette 20 suite à l'actionnement de tout organe de conduite du véhicule, notamment suite au passage d'un rapport de vitesse du véhicule.

Les moyens électroniques déterminent alors la fin "FIN.FERM" de la séquence de fermeture.

Ainsi, avantageusement, le hayon supérieur 16 est toujours systématiquement déverrouillé avant le portillon inférieur 18, et le portillon 18 est toujours verrouillé avant le hayon supérieur 16 de sorte que le bord transversal inférieur 30 du hayon supérieur 16 vient toujours s'étendre en regard de façon appropriée par rapport à la partie d'appui 32 de l'extrémité supérieure 34 du portillon inférieur 18, ce qui permet d'éviter une détérioration du bord transversal inférieur 30 du hayon supérieur 16 par le portillon inférieur 18.

Enfin, les moyens électroniques peuvent comporter une sécurité qui interdit la mise en marche du mécanisme d'essuyage 28 à partir d'un poste de conduite (non représenté) du véhicule, dès lors que le hayon est déverrouillé, c'est à dire lorsque la commande DHAY prend la valeur "I".

## Revendications

1. Agencement (10) pour l'ouverture et la fermeture d'un ouvrant transversal arrière (12) d'un véhicule (14), notamment un ouvrant arrière (12) d'un véhicule automobile de tourisme et/ou de loisirs, du type dans lequel l'ouvrant (12) comporte d'une part un hayon (16) supérieur, notamment un hayon comportant une lunette (20) vitrée, qui est articulé à son extrémité supérieure (22) autour d'un axe transversal supérieur et qui est mobile entre une position baissée de fermeture et une position levée d'ouverture, et d'autre part un portillon inférieur (18) qui est monté articulé à l'une de ses extrémités latérales (24), autour d'un axe vertical latéral ou, à son extrémité inférieure (26), autour d'un axe transversal, entre une position d'ouverture et une position de fermeture, et du type dans lequel, dans une position fermée de l'ouvrant (12), le bord (30) transversal inférieur du hayon (16) supérieur, s'étend en regard d'une partie d'appui (32) complémentaire d'extrémité (34) supérieure du portillon (18) inférieur, du type qui comporte des moyens électroniques et des moyens mécaniques pour commander l'ouverture, et pour interdire la fermeture du hayon (16) supérieur avant celle du portillon (18) inférieur,
**caractérisé en ce que** les moyens mécaniques comportent une serrure (38) commandée de hayon, une serrure (42) commandée de portillon, et des moyens (48) de rappel du hayon vers sa position levée dès lors que la serrure (38) commandée est déverrouillée du portillon inférieur (18).

2. Agencement (10) selon la revendication précédente, **caractérisé en ce que** les moyens électroniques sont susceptibles de commander l'ouverture de l'ouvrant arrière (12) selon un processus qui comporte:
- une première étape au cours de laquelle, en réponse à un premier ordre (ORD2) de l'utilisateur, notamment par une pression sur un bouton (50) de commande, les moyens électroniques commandent le déverrouillage (D_{HAY}) de la serrure (38) du hayon (16) pour provoquer son ouverture automatique sous l'action des moyens (48) de rappel,
- une deuxième étape au cours de laquelle, en réponse à un deuxième ordre (ORD3) de l'utilisateur, les moyens électroniques commandent le déverrouillage (D_{PORT}) de la serrure (42) du portillon (18).

3. Agencement (10) selon l'une quelconque des revendications précédentes, **caractérisé en ce que** l'ouvrant arrière (12) comporte un mécanisme (28) d'essuyage de la lunette (20) du hayon (16) dont au moins une partie est escamotable sur commande dans l'épaisseur du portillon (18), et qui est susceptible d'être mis en marche par un ordre d'essuyage (CMD_{MEL}) commandé à partir du poste de conduite du véhicule (14).

4. Agencement (10) selon la revendication précédente prise en combinaison avec la revendication 2, **caractérisé en ce que** le processus comporte une étape préliminaire au cours de laquelle, en réponse à un ordre (ORD1) préliminaire de l'utilisateur, les moyens électroniques commandent l'escamotage (E_{MEL}) du mécanisme (28) d'essuyage de la lunette (20).

5. Agencement (10) selon la revendication précédente **caractérisé en ce que**, si le mécanisme (28) d'essuyage de la lunette (20) est en marche en réponse à l'ordre d'essuyage (CMD_{MEL}) lorsque l'utilisateur adresse l'ordre préliminaire, notamment par pression sur le bouton (50) de commande, les moyens électroniques provoquent l'arrêt du mécanisme (28) d'essuyage indépendamment des ordres de commande provenant du poste de conduite du véhicule, avant de déclencher l'étape préliminaire d'escamotage (E_{MEL}).

6. Agencement (10) selon l'une des revendications 3 à 5, **caractérisé en ce que** les moyens électroniques comportent une sécurité interdisant la mise en marche du mécanisme d'essuyage en réponse à l'ordre d'essuyage (CMD_{MEL}) émis à partir du poste de conduite du véhicule (14), dès lors que le hayon (16) est déverrouillé.

7. Agencement (10) selon les revendications 5 ou 6, **caractérisé en ce que**, si un l'ordre d'essuyage (CMD_{MEL}) a été adressé par l'utilisateur à partir du poste de conduite du véhicule avant l'ouverture de l'ouvrant (12), les moyens électroniques de commande provoquent, après la fermeture de l'ouvrant (12), la remise en marche du mécanisme (28) d'essuyage, notamment de façon automatique ou en réponse à un ordre d'actionnement émis à partir du poste de conduite ou d'un organe de passage d'un rapport de vitesse du véhicule (14).

8. Agencement selon l'une quelconque des revendications 1 à 7, **caractérisé en ce que** le bord (30) transversal inférieur du hayon (16) supérieur comporte un joint (36) dont la lèvre s'étend, en position fermée de l'ouvrant (12), au contact de la partie (32) d'appui complémentaire d'extrémité supérieure (34) du portillon (18) inférieur.

## Claims

1. Arrangement (10) for the opening and closing of a transverse tailgate (12) of a vehicle (14), in particular a tailgate (12) of a passenger and/or leisure motor vehicle, of the type in which the tailgate (12) comprises, on the one hand, an upper hatch (16), in particular a hatch comprising a glazed window (20), which is articulated at its upper end (22) about an upper transverse axis and which is able to move between a lowered closed position and a raised open position, and, on the other hand, a lower gate (18) which is mounted in an articulated manner at one of its lateral ends (24) about a lateral vertical axis or, at its lower end (26), about a transverse axis, between an open position and a closed position, of the type in which, when the tailgate (12) is in a closed position, the lower transverse edge (30) of the upper hatch (16) extends opposite a complementary bearing portion (32) of the upper end (34) of the lower gate (18), and of the type which comprises electronic means and mechanical means for controlling the opening and for prohibiting the closing of the upper hatch (16) before the lower gate (18) has been closed, **characterized in that** the mechanical means comprise a controlled hatch lock (38), a controlled gate lock (42) and means (48) for returning the hatch towards its raised position as soon as the controlled lock (38) is unlocked from the lower gate (18).

2. Arrangement (10) according to the preceding claim, **characterized in that** the electronic means are able to control the opening of the tailgate (12) according to a process which comprises:
- a first step during which, in response to a first command (ORD2) from the user, in particular by pressing on a control button (50), the electronic means control the unlocking (D_{HAY}) of the lock (38) of the hatch (16) so as to cause it to open automatically under the action of the return means (48),
- a second step during which, in response to a second command (ORD3) from the user, the electronic means control the unlocking (D_{PORT}) of the lock (42) of the gate (18).

3. Arrangement (10) according to either one of the preceding claims, **characterized in that** the tailgate (12) comprises a mechanism (28) for wiping the window (20) of the hatch (16), at least part of which can be retracted on command into the thickness of the gate (18), and which mechanism is able to be started by a wiping command (CMD_{MEL}) ordered from the driver's station of the vehicle (14).

4. Arrangement (10) according to the preceding claim taken in combination with Claim 2, **characterized in that** the process comprises a preliminary step during which, in response to a preliminary command (ORD1) from the user, the electronic means control the retraction (E_{MEL}) of the mechanism (28) for wiping the window (20).

5. Arrangement (10) according to the preceding claim, **characterized in that**, if the mechanism (28) for wiping the window (20) is in operation in response to the wiping command (CMD_{MEL}) when the user issues the preliminary command, in particular by pressing on the control button (50), the electronic means cause the wiping mechanism to stop independently of the control commands from the driver's station of the vehicle before initiating the preliminary retraction step (E_{MEL}).

6. Arrangement (10) according to one of Claims 3 to 5, **characterized in that** the electronic means comprise a safety feature prohibiting the starting of the wiping mechanism in response to the wiping command (CMD_{MEL}) sent from the driver's station of the vehicle (14) as soon as the hatch (16) is unlocked.

7. Arrangement (10) according to Claim 5 or 6, **characterized in that**, if a wiping command (CMD_{MEL}) was issued by the user from the driver's station of the vehicle before the opening of the tailgate (12), the electronic control means cause the wiping mechanism (28) to restart after the closure of the tailgate (12), in particular in an automatic manner or in response to an actuating command sent from the driver's station or from a gearshift member of the vehicle (14).

8. Arrangement according to any one of Claims 1 to 7, **characterized in that** the lower transverse edge (30) of the upper hatch (16) comprises a seal (36) whose lip extends, when the tailgate (12) is in the closed position, in contact with the complementary bearing portion (32) of the upper end (34) of the lower gate (18).

## Patentansprüche

1. Anordnung (10) zum Öffnen und Schließen einer transversalen hinteren Tür (12) eines Fahrzeugs (14), insbesondere einer hinteren Tür (12) eines Personenwagens und/oder Freizeitwagens, bei dem die Tür (12) einerseits eine obere Heckklappe (16), insbesondere eine Heckklappe mit einer Glasscheibe (20), umfasst, die an ihrem oberen Ende (22) um eine obere Querachse angelenkt und die zwischen einer abgesenkten Verschlussposition und einer hochgehobenen Öffnungsposition beweglich ist, und andererseits ein unteres Tor (18) umfasst, das an einem seiner seitlichen Enden (24) um eine seitliche Vertikalachse oder an seinem unteren Ende (26) um eine Querachse zwischen einer Öffnungsposition und einer Verschlussposition angelenkt ist, und bei der sich in einer geschlossenen Position der Tür (12) der untere Querrand (30) der oberen Heckklappe (16) gegenüber einem Stützteil (32) komplementär zum oberen Ende (34) des unteren Tors (18) erstreckt, und die elektronische und mechanische Mittel umfasst, um das Öffnen zu steuern und das Schließen der oberen Heckklappe (16) vor dem des unteren Tors (18) zu verhindern,
**dadurch gekennzeichnet, dass** die mechanischen Mittel ein gesteuertes Heckklappenschloss (38), ein gesteuertes Torschloss (42) und Mittel (48) zur Rückstellung der Heckklappe in ihre hochgehobene Position umfassen, sobald das gesteuerte Schloss (38) aus dem unteren Tor (18) entriegelt wird.

2. Anordnung (10) nach dem vorhergehenden Anspruch, **dadurch gekennzeichnet, dass** die elektronischen Mittel das Öffnen der hinteren Tür (12) nach einem Verfahren steuern können, umfassend:
- einen ersten Schritt, in dem als Antwort auf einen ersten Befehl (ORD2) des Benutzers, insbesondere durch Drücken auf einen Steuerknopf (50), die elektronischen Mittel das Entriegeln (D_{HAY}) des Schlosses (38) der Heckklappe (16) steuern, um ihr automatisches Öffnen unter der Wirkung der Rückstellmittel (48) hervorzurufen,
- einen zweiten Schritt, in dem als Antwort auf einen zweiten Befehl (ORD3) des Benutzers die elektronischen Mittel das Entriegeln (D_{PORT}) des Schlosses (42) des Tors (18) steuern.

3. Anordnung (10) nach einem der vorhergehenden Ansprüche, **dadurch gekennzeichnet, dass** die hintere Tür (12) einen Mechanismus (28) zur Reinigung der Scheibe (20) der Heckklappe (16) umfasst, der mindestens zum Teil auf Befehl in die Stärke des Tors (18) einziehbar ist und der durch einen Reinigungsbefehl (CMD_{MEL}), der von der Fahrerstation des Fahrzeugs (14) gesteuert wird, in Gang gesetzt werden kann.

4. Anordnung (10) nach dem vorhergehenden Anspruch in Kombination mit Anspruch 2., **dadurch gekennzeichnet, dass** das Verfahren einen vorherigen Schritt umfasst, in dem als Antwort auf einen vorherigen Befehl (ORD1) des Benutzers die elektronischen Mittel das Einziehen (E_{MEL}) des Reinigungsmechanismus (28) der Scheibe (20) steuern.

5. Anordnung (10) nach dem vorhergehenden Anspruch, **dadurch gekennzeichnet, dass**, wenn der Reinigungsmechanismus (28) der Scheibe (20) als Antwort auf den Reinigungsbefehl (CMD_{MEL}) in Betrieb ist, wenn der Benutzer den vorherigen Befehl insbesondere durch Drücken auf den Steuerknopf (50) gibt, die elektronischen Mittel das Anhalten des Reinigungsmechanismus (28) unabhängig von den Steuerbefehlen, die von der Fahrerstation des Fahrzeugs kommen, hervorrufen, bevor der vorherige Schritt des Einziehens (E_{MEL}) ausgelöst wird.

6. Anordnung (10) nach einem der Ansprüche 3 bis 5, **dadurch gekennzeichnet, dass** die elektronischen Mittel eine Sicherheit umfassen, die die Ingangsetzung des Reinigungsmechanismus als Antwort auf den Reinigungsbefehl (CMD_{MEL}), der von der Fahrerstation des Fahrzeugs (14) gegeben wird, verhindern, sobald die Heckklappe (16) entriegelt ist.

7. Anordnung (10) nach den Ansprüchen 5 oder 6, **dadurch gekennzeichnet, dass**, wenn der Reinigungsbefehl (CMD_{MEL}) vom Benutzer von der Fahrerstation des Fahrzeugs vor dem Öffnen der Tür (12) gegeben wurde, die elektronischen Steuermittel nach dem Schließen der Tür (12) die Wiederingangsetzung des Reinigungsmechanismus (28) insbesondere automatisch oder als Antwort auf einen Betätigungsbefehl, der von der Fahrerstation oder einem Gangschaltungselement des Fahrzeugs (14) gegeben wird, hervorrufen.

8. Anordnung nach einem der Ansprüche 1 bis 7, **dadurch gekennzeichnet, dass** der untere Querrand (30) der oberen Heckklappe (16) eine Dichtung (36) umfasst, deren Lippe sich in Verschlussposition der Tür (12) in Kontakt mit dem Stützteil (32) komplementär zum oberen Ende (34) des unteren Tors (18) erstreckt.
